# EUROPÄISCHE PATENTANMELDUNG

(11) **EP 0 664 148 A1**
(43) Veröffentlichungstag der Anmeldung: **26.07.1995**
(21) Anmeldenummer: 95100466.2
(22) Anmeldetag: 14.01.1995
(51) Int. Cl.: B01D 53/86, F23G 7/06

(54) **Verfahren zur Reinigung von unter Druck stehenden Abgasen durch katalytische Nachverbrennung**

(30) Priorität: 19.01.1994 DE 4401407
(71) Anmelder: Degussa Aktiengesellschaft, D-60311 Frankfurt (DE); H u. G Hegmanns, Ingenieurgesellschaft mbH, D-45881 Gelsenkirchen (DE)
(72) Erfinder: Müller, Herbert, Dr., D-63755 Michelbach-Alzenau (DE); Peldszus, Erik, D-63594 Hasselroth 1 (DE); Deller, Klaus, Dr., D-63512 Hainburg (DE); Fiedler, Klaus, D-45276 Essen (DE); Gottschling, Gerd S., D-45276 Essen (DE)

(57) **Zusammenfassung**

Die Erfindung betrifft ein Verfahren zur Reinigung von unter Druck stehenden Abgasen, die mit organischen Luftschadstoffen beladen sind, durch katalytische Nachverbrennung in einem Druckreaktor bei einer Arbeitstemperatur zwischen 250 und 800° C, wobei die Arbeitstemperatur je nach Schadstoffbeladung des Abgases durch die exothermen Reaktionen am Katalysator und/oder durch Zufuhr von externer Stützenergie aufrecht erhalten wird. Das Verfahren ist dadurch gekennzeichnet, daß die Nachverbrennung bei Drucken zwischen 2 und 20 bar ohne oder unter Zufuhr von Druckluft vorgenommen und die Stützenergie dem Abgas vor dem Druckreaktor über einen Wärmeübertrager und/oder Elektroaufheizer zugeführt wird.

## Beschreibung

Die Erfindung betrifft ein Verfahren zur Reinigung von unter Druck stehenden Abgasen, die mit organischen Luftschadstoffen beladen sind durch katalytische Nachverbrennung in einem Druckreaktor bei einer Arbeitstemperatur zwischen 250 und 800° C.

Unter Druck stehende Prozeßabgase, z. B. aus Anlagen zur Herstellung von Polyestern und anderen Faser- oder Kunststoffproduktionsanlagen oder drucklose Prozeßabgase aus Anlagen zur Herstellung von Lacken und Druckfarben, enthalten als Luftschadstoffe Lösungsmittel wie Benzol, Toluol, Xylol und andere Kohlenwasserstoffe, die entfernt werden müssen, um gesetzliche Vorgaben, z. B. Werte nach TA-Luft, zu erfüllen. Bei den heute üblichen Verfahren zur Abgasreinigung unterscheidet man nasse und trockne sowie thermische und katalytische Reinigungsmethoden, die unter Druck oder drucklos betrieben werden. Die meisten dieser Verfahren erzeugen Reststoffe, die anschließend regeneriert oder anderweitig aufgearbeitet werden müssen.

Die nassen Verfahren, die auf physikalischer oder chemischer Absorption beruhen, erzeugen eine mit den Schadstoffen oder den Reaktionsprodukten beladene Waschflüssigkeit, die entsprechend zu behandeln oder zu entsorgen ist.

Die trockenen Verfahren, z. B. Adsorptionen an Aktivkohle, Herdofenkoks oder Zeolithe, binden mehr oder weniger selektiv einen Schadstoff und durch Koadsorptionseffekte teilweise weitere Gasbegleitstoffe. Nach Beladung des Adsorbers muß dieser regeneriert werden. Dies geschieht in der Regel durch Strippung mit Dampf, Stickstoff oder anderen Inertgasen. Die so beladenen Gase müssen wiederum behandelt bzw. entsorgt werden.

Thermische Verfahren, z. B. Pyrolyse, Hochtemperaturverbrennung oder Vergasung, setzen die Schadstoffe in Gegenwart von Sauerstoff/Luftsauerstoff und einem gegebenenfalls notwendigen Heizgas um. Die heißen Rauchgase werden weiter behandelt, energetisch zur Dampferzeugung genutzt und in die Atmosphäre geleitet.

Die katalytischen Verfahren, die eine Umsetzung der Schadstoffe an einem Festbettkatalysator vornehmen, arbeiten häufig mit einer Stützflamme für den Anfahrzustand bzw. auch zur Aufrechterhaltung der Arbeitstemperatur für die Reaktionen im stationären Betrieb.

Die DE 37 31 688 C 2 beschreibt ein solches katalytisches Verfahren zur Reinigung von Kohlenwasserstoffe, Halogenkohlenwasserstoffe und Kohlenmonoxid enthaltenden Abgasen. Die Abgase werden bei Temperaturen zwischen 300 und 800° C in einem zweistufigen katalytischen Prozeß durch eine oxidative Spaltung und eine nachfolgende oxidative Nachverbrennung gereinigt. Die gereinigte Abluft wird nach Wärmeentzug in einem Wärmeübertrager in die Atmosphäre abgegeben. Die katalytisch aktive Substanz der ersten Zone ist Aluminiumoxid, Siliziumoxid, Aluminiumsilikat und/oder ein Zeolith mit einem Gehalt von 0,1 bis 20 Gew.-% an oxidischen Verbindungen der Elemente Barium und/oder Magnesium. In der zweiten Zone wird ein Edelmetallkatalysator, der Platin, Palladium und/oder Rhodium auf einem hochoberflächigen oxidischen Träger wie γ-Aluminiumoxid enthält, eingesetzt.

Die Vorheizung des zu reinigenden Abgases auf die Arbeitstemperatur des katalytischen Reinigungsprozesses wird mit einer Methan/Luft-Stützgasflamme vorgenommen. Die dabei entstehenden Verbrennungsgase werden direkt den Abgasen zugemischt. Dieses Verfahren arbeitet bei Normaldruck (1 bar) als auch bei Drucken von 10 bar.

Es hat sich jedoch gezeigt, daß die Erzeugung der Stützflamme schon bei mäßigen Überdrucken einen Spezialbrenner sowie eine aufwendige Sicherheitstechnik erfordert, um einen einigermaßen zuverlässigen Betrieb zu gewährleisten. Aus diesen Gründen arbeiten alle bekannten großtechnisch realisierten katalytischen Nachverbrennungsanlagen bei nur geringfügigen Überdrucken, die ausreichen, um den Druckverlust durch die Katalysatorbetten auszugleichen. Typische Werte für diese Überdrucke liegen bei etwa 5 bis 10 mbar. Daher müssen unter Druck stehende Prozeßabgase zunächst entspannt werden, bevor sie gereinigt werden können.

Der Erfindung liegt die Aufgabe zugrunde, ein katalytisches Reinigungsverfahren anzugeben, welches die beschriebenen Nachteile der aus dem Stand der Technik bekannten Reinigungsverfahren vermeidet.

Insbesondere soll ein Verfahren angegeben werden, welches auch bei Gasdrucken bis zu 20 bar eine einfache und zuverlässige Zuführung von Stützenergie während des Anfahrvorganges und zur Aufrechterhaltung der Arbeitstemperatur im Dauerbetrieb gestattet. Weiterhin soll das Verfahren durch eine geeignete Prozeßführung die weitere energetische bzw. direkte Nutzung des gereinigten Abgases ermöglichen.

Diese Aufgabe wird gelöst durch ein Verfahren zur Reinigung von unter Druck stehenden Abgasen, die mit organischen Luftschadstoffen beladen sind, durch katalytische Nachverbrennung in einem Druckreaktor bei einer Arbeitstemperatur zwischen 250 und 800° C, wobei die Arbeitstemperatur je nach Schadstoffbeladung des Abgases durch die exothermen Reaktionen am Katalysator und/oder durch Zufuhr von externer Stützenergie aufrecht erhalten wird. Das Verfahren ist dadurch gekennzeichnet, daß die Nachverbrennung bei Drucken zwischen 2 und 20 bar ohne oder unter Zufuhr von Druckluft vorgenommen und die Stützenergie dem Abgas vor dem Druckreaktor über einen Wärmeübertrager und/oder Elektroaufheizer zugeführt wird.

Das erfindungsgemäße Verfahren vermeidet also die direkte Aufheizung des unter Druck stehenden Abgases mit einem Brenner und Stützgas.

Die notwendige Stützenergie wird dem Abgas vor dem im Druckreaktor befindlichen Katalysatorbett über einen Elektroaufheizer zugeführt. Bei Verwendung einer Stützflamme zur Erzeugung der Stützenergie wird die Wärmeenergie der Verbrennungsgase über einen Wärmeübertrager auf die Abgase übertragen. Die Stützflamme kann bei Atmosphärendruck brennen. Die Verbrennungsabgase werden dabei nicht den zu reinigenden Abgasen zugemischt, sondern nach Wärmeabgabe im Wärmeübertrager an die Atmosphäre abgegeben.

Das Verfahren ist für die Reinigung unterschiedlicher Prozeßabgase geeignet. Die zu verwendenden Katalysatoren hängen dabei von der Art der in den Abgasen enthaltenen Verunreinigungen ab. Prinzipiell können alle auf dem Gebiet der katalytischen Nachverbrennung bekannten Katalysatorsysteme eingesetzt werden. Insbesondere eignen sich Festbett-Katalysatoren in Form von Honigwaben-Körpern mit parallelen Strömungskanälen. Vollkatalysatoren, d. h. Katalysatorkörper, die vollständig aus katalytischer Masse bestehen, sind ebenso einsetzbar wie Beschichtungskatalysatoren, die aus einem katalytisch inerten Tragkörper bestehen, auf dem die katalytisch aktive Masse in Form einer Beschichtung aufgebracht ist. Das Verfahren ist sowohl für einstufige als auch mehrstufige katalytische Reinigungen geeignet.

Bestimmte technische Prozesse erzeugen Abgase, die sich durch eine katalytische Nachverbrennung vollständig in unschädliche Produkte wie N₂, H₂O und CO₂ überführen lassen. In diesen Fällen ist es durch Zudosierung von Druckluft möglich, den Prozeß so zu führen, daß der Sauerstoff praktisch vollständig für die Oxidation der Schadstoffe verbraucht wird und das gereinigte Abgas somit als Inertgasersatz in den Drucksturen 1 bis 20 bar zur Verfügung steht. Alternativ hierzu kann das gereinigte Abgas auch zur Nutzung seiner Druckenergie über eine Entspannungsturbine geleitet und anschließend in die Atmosphäre abgegeben oder als druckloses Inertgas eingesetzt werden.

Das Verfahren ist auf Abgase mit Schadstoffbeladungen bis zu 15 g/m³ anwendbar. Oberhalb von Beladungen von etwa 1 g/m³ kann das Reinigungsverfahren abgesehen von der Anfahrphase autotherm geführt werden, d. h. die bei der exothermen Reaktion am Katalysator frei werdende Wärmeenergie reicht aus, um das Abgas mittels weiterer Wärmeübertrager auf die Arbeitstemperatur der katalytischen Reaktion aufzuheizen.

Ein besonderer Vorteil des erfindungsgemäßen Verfahrens ist, daß unter Druck stehende Prozeßabgase zur Reinigung nicht erst entspannt werden müssen, sondern direkt abgereinigt werden können. Es hat sich gezeigt, daß wegen der erhöhten Dichte der unter Druck stehenden Abgase auch der Umsatz der katalytischen Reaktion verbessert wird. Wegen des verringerten Betriebsvolumenstromes infolge des hohen Abgasdruckes und des verbesserten katalytischen Umsatzes können die Ausrüstungen der katalytischen Abgasreinigung kleiner dimensioniert, Platzbedarf und Energieaufwand sowie die Investitionskosten minimiert werden. Es werden keine weiteren Betriebsmittel - außer Luft und Kühlwasser - benötigt.

Eine weitere vorteilhafte Ausgestaltung der Erfindung besteht darin, daß der katalytischen Nachverbrennung eine katalytische Sauerstoffreduktion mit Wasserstoff vor- oder nachgeschaltet wird. Bevorzugt wird die Sauerstoffreduktion der Nachverbrennung nachgeschaltet. Diese Ausführung des erfindungsgemäßen Verfahrens wird dann eingesetzt, wenn das Abgas mehr Sauerstoff enthält, als zur vollständigen Verbrennung der Schadstoffe benötigt wird, wenn also der Sauerstoff im stöchiometrischen Überschuß vorliegt.

Die katalytische Sauerstoffreduktion wird durch geeignete Regelung des Wasserstoffstromes so geführt, daß das gereinigte Abgas weitgehend sauerstofffrei ist. In einfacher Weise kann diese Regelung durch Messung des Sauerstoffgehaltes im gereinigten Abgas mittels einer Sauerstoffsonde vorgenommen werden. Der der katalytischen Sauerstoffreduktion zugeführte Wasserstoffstrom wird dann so geregelt, daß im gereinigten Abgas kein Sauerstoff mehr meßbar ist.

Als Katalysatoren für die katalytische Sauerstoffreduktion können alle bekannten Platingruppenmetall-haltige Oxidationskatalysatoren, insbesondere Katalysatoren mit Platin und/oder Palladium auf γ-Aluminiumoxid, eingesetzt werden.

Die Katalysatorbetten für die katalytische Sauerstoffreduktion und die katalytische Nachverbrennung können hintereinander in einem gemeinsamen Druckreaktor angeordnet sein. Bei Abgasen mit hohen Schadstoffbelastungen empfiehlt es sich jedoch, beide Katalysatorbetten in getrennten Druckreaktoren unterzubringen. Das ermöglicht, die bei der Nachverbrennung anfallende Verbrennungswärme zumindest teilweise mittels eines Wärmetauschers zwischen beiden Druckreaktoren aus dem Abgas zu entfernen, um eine Überhitzung des Katalysators der katalytischen Sauerstoffreduktion zu vermeiden.

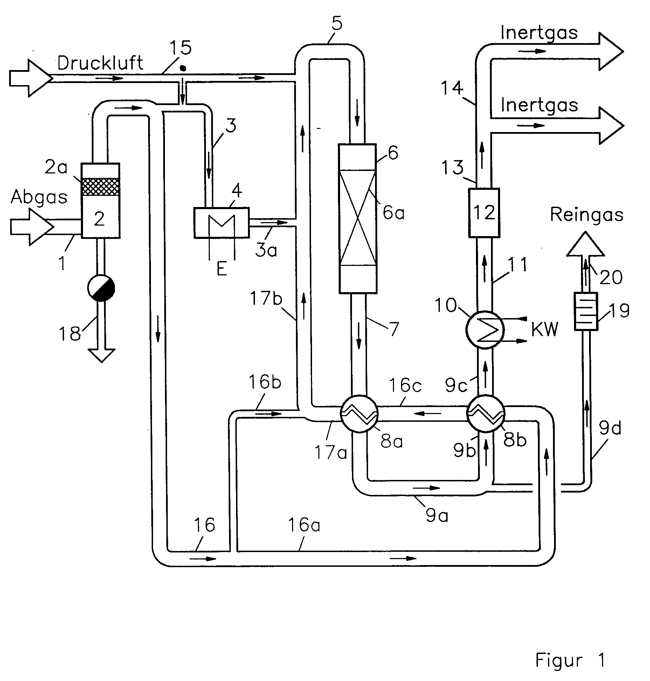

Anhand von Verfahrensfließbildern soll das erfindungsgemäße Verfahren näher erläutert werden:
- Figur 1:: Verfahrensfließbild für die Nutzung des gereinigten Abgases als Inertgasersatz (Verfahrensvariante 1)
- Figur 2:: Verfahrensfließbild für die Nutzung der Druckenergie des gereinigten Abgases mittels einer Entspannungsturbine (Verfahrensvariante 2)
- Figur 3:: Verfahrensfließbild für die nachgeschaltete katalytische Sauerstoffreduktion (Verfahrensvariante 1)
Bei dem in Figur 1 dargestellten Verfahren tritt das feuchte, mit Wasserdampf gesättigte oder übersättigte, mit Schadstoffen beladene Abgas eines technischen Prozesses unter einem Betriebsdruck von bis zu 20 bar über die Leitung 1 in den Abscheidebehälter 2 ein. Im Abscheidebehälter 2 befindet sich ein Demisterpaket 2a, in dem die im Abgas enthaltenen Flüssigkeitsanteile, in Form von mitgerissenen Tropfen, abgeschieden und im Sumpf des Abscheidebehälters 2 gesammelt und über Leitung 18 abgelassen werden.

Das getrocknete Abgas verläßt nach Durchströmen des Demisterpaketes 2a den Abscheidebehälter 2 am Kopf und gelangt über die Leitung 3 in den Elektroaufheizer 4. Hier wird das Abgas mit der Eintrittstemperatur von ca. 20° C auf die für den Katalysator notwendige Anspringtemperatur von ca. 250° C erwärmt.

Das vorgewärmte Abgas verläßt den Elektroaufheizer 4 und gelangt über die Leitung 5 in den Reaktor 6.

Der Reaktor ist mit einer Katalysatorschüttung 6a als Festbettreaktor ausgeführt. Eine Ausrüstung des Reaktors mit monolithischen Katalysatoren ist ebenfalls möglich. Der Katalysator selbst ist in einer Vorwärmphase mit Druckluft auf eine Temperatur von mehr als 250° C aufgeheizt worden.

Das Abgas durchströmt den Reaktor und das Katalysatorbett von oben nach unten. Hierbei finden im Katalysatorbett bei einer kurzen, hinreichenden Verweilzeit die Umsetzungen, im folgenden katalytische Oxidationen genannt, statt. Der für die katalytischen Oxidationen notwendige Sauerstoffbedarf wird in der Regel durch den im Abgas enthaltenen freien Sauerstoff gedeckt.

Kann der für die katalytischen Oxidationen notwendige Sauerstoff nicht über das Abgas zur Verfügung gestellt werden, so wird über Leitung 15 dem Reaktor Druckluft zugeführt. Die Druckluft kann wahlweise über den Aufheizer 4, wenn größere Mengen an Druckluft zugegeben werden müssen, oder direkt in den Reaktor 6 eingeleitet werden, wenn nur kleine Mengen notwendig sind. Im Normalbetrieb ist keine Druckluftzufuhr notwendig, da die Abgase aus den o.g. Herstellungsprozessen ausreichend freien Sauerstoff bzw. Luft enthalten.

Das gereinigte Abgas, das sogenannte Reingas, tritt am Fuß des Reaktors aus. Das Reingas hat, bedingt durch die exothermen Reaktionen, eine Temperaturerhöhung erfahren. Diese ist in erster Linie von den Eintrittsbeladungen der oxidierbaren Schadstoffe abhängig und proportional zum Formelumsatz der einzelnen Reaktionswärmen. Die Temperaturerhöhung des Gases liegt im Bereich von ca. 100° C bei minimaler - z. B. 1,5 g/Nm³ - und bei ca. 180° C bei maximaler - z.B. 4,0 g/Nm³ - Beladung.

Das heiße Reingas mit einer Temperatur von ca. 450° C, wird über die Leitung 7 dem Gas-Wärmeübertrager 8a zugeführt. In diesem Wärmeübertrager wird im Gegenstrom mit einem Teilstrom des bereits im Wärmeübertrager 8b vorgewärmten Abgases, das über Leitung 16c in den Wärmeübertrager gelangt, das heiße Reingas abgekühlt.

Das vorgewärmte Abgas nimmt die Wärme des heißen Reingases auf und verläßt, auf ca. 300° C erwärmt, den Wärmeübertrager 8a über Leitung 17a. Die Leitung 17b ist mit der Reaktoreintrittsleitung 5 verbunden. Die Teilstrommenge des Abgases, die durch die Leitung 16 strömt, wird im steigenden Verhältnis zur Teilstrommenge des Abgases, die über den Elektroanfahrerhitzer 4 geführt wird, gefahren, bis die 100 %ige Betriebsmenge des kalten Abgases über Leitung 16a zum Wärmeübertrager 8b strömt. Im Wärmeübertrager 8b wird das kalte Abgas, das über Leitung 16a zugeführt wird, gegen das noch heiße Reingas aus Leitung 9b zur besseren Energieauswertung vorgewärmt, bevor es über Leitung 16c in den Wärmeübertrager 8a strömt. Der Wärmeübertrager 8b wird so gefahren, daß die Temperatur des Reingases der Leitung 9b minimal wird. Mit dieser Fahrweise, die dann energetisch autark ist, wird der stationäre Betriebszustand erreicht.

Das in den Wärmeübertragern 8a und 8b abgekühlte Reingas wird über Leitung 9c einem Gas/Wasser-Wärmeübertrager 10 zugeführt. In diesem Wärmeübertrager wird das noch warme Reingas gegen Kühlwasser auf ca. 35° C abgekühlt und über Leitung 11 einer Trocknereinheit 12 zugeführt.

In dieser Trocknereinheit, die als Molsiebtrockner arbeitet und mit Luft, einem anderen Inertgas oder einem Teilstrom des getrockneten Reingases kalt regenerierbar ist, wird das Reingas auf einen Drucktaupunkt von -40° C getrocknet.

Das trockene Reingas verläßt über Leitung 13 die Trocknereinheit und steht als Inertgas, z.B. als Stickstoffersatz, mit einer Restbeladung an Schadstoffen, die den Grenzwerten der TA-Luft genügen, zur Verfügung. Die zu erzeugende Inertgasmenge kann, wie im angegebenen Beispiel, Teilmenge der gesamten Reingasmenge sein. In diesem Fall wird die in der Regel dann kleine Restgasmenge über Leitung 9d und den Schalldämpfer 19 durch Leitung 20 in die Atmosphäre entspannt. Dieser Vorgang kann alternativ vor oder nach Wärmenutzung im Wärmeübertrager 8b erfolgen.

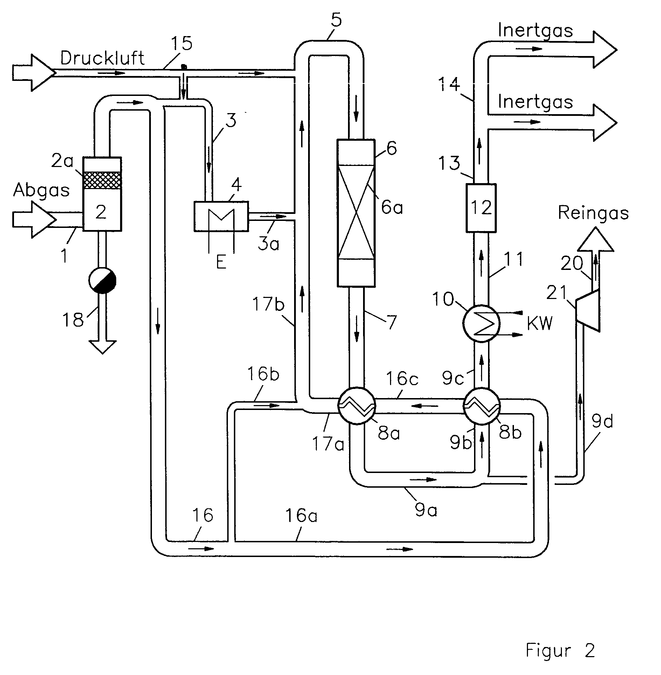

Bei der in Figur 2 dargestellten Verfahrensvariante haben die gleichnumerierten Bezugszeichen die gleiche Bedeutung wie in Figur 1.

In Abweichung zur Verfahrensvariante nach Figur 1 wird in dieser Verfahrensvariante das durch die Leitung 9 strömende, gekühlte Reingas einer Entspannungsturbine 21 zugeführt und zur Stromerzeugung genutzt. Das so entspannte Gas wird dann in die Atmosphäre geleitet, oder als Niederdruck-Inertgas zur weiteren Verwendung genutzt.

Abschließend soll die Wirkungsweise des erfindungsgemäßen Verfahrens durch die nachfolgend beschriebenen rechnerischen Ausführungsbeispiele erläutert werden. Diesen Beispielen liegen typische Abgasmengen und Abgaszusammensetzungen einer Terephthalsäure-Fertigung zugrunde.

### Beispiel 1

Beispiel 1 betrifft die Verfahrensvariante 1 gemäß Figur 1 und beschreibt den energetisch autarken, stationären Betriebszustand, nachdem das Katalysatorfestbett 6a und das angeschlossene Leitungssystem vorgewärmt, der Elektroaufheizer 4 abgeschaltet und die Anfahrphase nach Umschaltung von Druckluft auf Abgas abgeschlossen ist.

Die Berechnungen gehen von folgenden Vorgaben aus:

| | |
|---|---|
| Abgasmenge: | 29363 Kg/h = 23.000 Nm³/h |
| Temperatur: | 20° C |
| Betriebsdruck: | 12,5 bar |

### Abgaszusammensetzung:

| | |
|---|---|
| Lösungsmittel: | 92,0 Kg/h p-Xylol |
| Säure: | 0,6 Kg/h Essigsäure |
| Acetat: | 0,6 Kg/h Methylacetat |
| sonstige Stoffe: | 210,3 Kg/h Kohlenmonoxid |
| | 26901,0 Kg/h Stickstoff |
| | 1051,1 Kg/h Sauerstoff |
| | 1129,3 Kg/h Kohlendioxid |
| | 25,3 Kg/h Wasser |

### Katalysatorschüttung

| | |
|---|---|
| Katalysator: | Pt/Pd auf gitterstabilisierten |
| | γ-Aluminiumoxid |
| | 0,3 Gew.-% Gesamtedelmetallgehalt |
| Katalysatorform: | Kugeln mit 2 - 4 mm Durchmesser |
| Katalysatormenge: | 900 Kg = 1,53 m³ |
| Raumgeschwindigkeit: | 15.000 h⁻¹ |

Wegen des hohen Anteils an oxidierbaren Schadstoffen des Abgases kann das Verfahren energetisch autark ablaufen. Die Abgasmenge wird daher unter Umgehung des Elektroaufheizers 4 vollständig über Leitung 16 der Reinigungsanlage zugeführt.

Ein Teilstrom des Abgases strömt durch die Leitung 16a zum Wärmeübertrager 8b und wird hierbei gegen noch warmes Reingas auf ca. 265° C vorgewärmt und im Wärmeübertrager 8a gegen das heiße Reingas aus dem Reaktor auf ca. 435° C erhitzt. Das heiße Abgas strömt durch Leitung 17a und vereinigt sich mit dem Rest des kalten Abgases, das direkt durch Kurzschlußleitung 16b geführt worden ist. Durch die unterschiedlich temperierten Teilströme - 16b und 17a - stellt sich am Reaktoreintritt eine Mischtemperatur von ca. 250° C ein. Das so temperierte Abgas strömt über Leitung 5, die mit der Leitung 17b verbunden ist, in den Reaktor 6 und durch das Katalysatorfestbett 6a.

Am Katalysator laufen folgende exotherme Reaktionen ab:

p-Xylol C₈H₁₀ + 10,5O₂ → 8CO₂ + 5H₂O + Q

Essigsäure C₂H₄OO + 2O₂ → 2CO₂ + 2H₂O + Q

Methylacetat C₃H₆OO + 3,5O₂ → 3CO₂ + 3H₂O + Q

Kohlenmonoxid CO + 0,5O₂ → CO₂ + + Q

Bedingt durch die Wärmetönung strömt das heiße Reingas mit einer Temperatur von ca. 445° C durch Leitung 7 in den Wärmeübertrager 8a und erhitzt das bereits vorgewärmte Abgas. Dabei kühlt sich das Reingas auf ca. 355° C ab. Das Reingas soll in diesem Beispiel mit 14000 kg/h als Inertgasersatz genutzt werden. Diese Reingasmenge strömt über die Leitung 9b zum Wärmeübertrager 8b. Die restliche Reingasmenge strömt durch Leitung 9d, Schalldämpfer 19 und Leitung 20 und wird in die Atmosphäre entspannt. Im Wärmeübertrager 8b wird die Temperatur des Reingases auf ca. 75° C gesenkt. Bei dieser Temperatur ist sichergestellt, daß der Taupunkt des Gases weder im Wärmeübertrager noch in der angeschlossenen Leitung 9c unterschritten wird. Das noch warme Reingas strömt über Leitung 9c zum Gaskühler 10. Hier findet im Gegenstrom mit Kühlwasser eine weitere Abkühlung des Reingases auf 35° C statt. Das abgekühlte Reingas wird über Leitung 11 in die Trocknereinheit 12 geleitet. In der Trocknereinheit wird das Gas am Molsieb so getrocknet, daß ein Drucktaupunkt von -40°C erreicht wird. Das getrocknete kalte Reingas weist Restgehalte an Kohlenwasserstoffen und Kohlenmonoxid auf, die wesentlich unter den Grenzwerten der TA-Luft liegen (Gesamtkohlenwasserstoffe < 100 mg/Nm³;
Kohlenmonoxid < 100 mg/Nm³). Das Druckgefälle des Gasweges beträgt bei diesen Betriebswerten ca. 4,5 bar. Damit kann das Reingas mit einem Druck von ca. 8 bar als Intergas, z. B. als Ersatz für Stickstoff, verwendet werden. Die Stoffströme sind in der Tabelle 1 zusammengestellt.

**Tabelle 1**

| Strom-Nr. | 1 | 5 | 7 | 9a | 9c |
|---|---|---|---|---|---|
| Massenstrom [kg/h] | 29363.0 | 29363.0 | 29363.0 | 29363.0 | 14000.0 |
| Temperatur [° C] | 20.0 | 250.0 | 445.0 | 355.0 | 75.0 |
| Druck [bar] | 12.5 | 11.5 | 10.5 | 9.5 | 9.0 |

| Strom-Nr. | 11 | 16a | 16b | 16c | 17a |
|---|---|---|---|---|---|
| Massenstrom [kg/h] | 14000.0 | 16002.0 | 13361.0 | 16002.0 | 16002.0 |
| Temperatur [° C] | 35.0 | 20.0 | 20.0 | 265.0 | 435.0 |
| Druck [bar] | 8.5 | 12.5 | 12.5 | 12.0 | 11.5 |

### Beispiel 2

Beispiel 2 (Verfahrensvariante 1, Figur 1) behandelt den Fall geringer Schadstoffbeladung, so daß eine ständige Zufuhr von Stützenergie über den Elektroaufheizer notwendig ist.

Die Berechnungen gehen von folgenden Vorgaben aus:

| | |
|---|---|
| Abgasmenge: | 29320 Kg/h = 23.000 Nm³ |
| Temperatur: | 20° C |
| Betriebsdruck: | 12,5 bar |

### Abgaszusammensetzung:

| | |
|---|---|
| Lösungsmittel: | 20,0 Kg/h p-Xylol |
| Säure: | 0,6 Kg/h Essigsäure |
| Acetat: | 0,6 Kg/h Methylacetat |
| sonstige Stoffe: | 30,0 Kg/h Kohlenmonoxid |
| | 27063,5 Kg/h Stickstoff |
| | 1051,0 Kg/h Sauerstoff |
| | 1129,3 Kg/h Kohlendioxid |
| | 25,0 Kg/h Wasser |

### Katalysatorschüttung: wie in Beispiel 1

Der Anteil der oxidierbaren Gasbegleitstoffe erfordert, daß ca. 1500 kg/h Abgas kontinuierlich über den Elektro-aufheizer 4 geleitet werden. Der Sauerstoffanteil im Abgas ist so hoch, daß keine Druckluft zugeschaltet werden muß. Es soll analog zum Ausführungsbeispiel 1 wiederum eine Reingasmenge von 14000 kg/h als Inertgasersatz erzeugt werden.

Ein Teilstrom des Abgases von 27820 kg/h strömt durch Leitung 16a zum Wärmeübertrager 8b und wird hierbei gegen noch warmes Reingas auf ca. 72° C vorgewärmt und im Wärmeübertrager 8a gegen das heiße Reingas aus dem Reaktor auf ca. 244° C erhitzt. Dieses Gas vereint sich in der Leitung 5 mit der auf 350° C erwärmten Abgasteilmenge, die kontinuierlich über den Elektro-Aufheizer 4 gefahren wird, so daß am Reaktoreintritt die Mischtemperatur von 250° C vorliegt. Die Kurzschlußleitung 16b ist hierbei geschlossen.

Am Reaktoraustritt hat das heiße Reingas eine Temperatur von 292° C, es strömt über Leitung 7 in den Wärmeübertrager 8a und erwärmt hierbei das vorgewärmte Abgas. Das abgekühlte Reingas verläßt den Wärmeübertrager mit einer Temperatur von ca. 131° C. Die Teilmenge von 14000 kg/h strömt über die Leitung 9b in den Wärmeübertrager 8b und kühlt sich hierbei weiter ab. Im Gaskühler 10 findet im Gegenstrom mit Kühlwasser eine weitere Abkühlung des Reingases statt. Dabei wird der Taupunkt nicht unterschritten, so daß das kalte, ungesättigte Reingas über Leitung 11 in die Trocknereinheit 12 geleitet werden kann. In der Trocknereinheit wird das Gas so getrocknet, daß ein Drucktaupunkt von -40° C erreicht wird. Das getrocknete kalte Reingas weist Restgehalte an Kohlenwasserstoffen und Kohlenmonoxid auf, die wesentlich unter den den Grenzwerten der TA-Luft liegen. Die Stoffströme dieses Beispiels sind in der Tabelle 2 zusammengestellt.

**Tabelle 2**

| Strom-Nr. | 1 | 3b | 5 | 7 | 9a |
|---|---|---|---|---|---|
| Massenstrom [kg/h] | 27820.0 | 1500.0 | 29320.0 | 29320.0 | 29320.0 |
| Temperatur [° C] | 20.0 | 350.0 | 250.0 | 292.0 | 131.0 |
| Druck [bar] | 12.0 | 11.5 | 11.5 | 10.5 | 9.5 |

| Strom-Nr. | 9b | 9c | 16a | 16c | 17a |
|---|---|---|---|---|---|
| Massenstrom [kg/h] | 14000.0 | 14000.0 | 27820.0 | 27820.0 | 27820.0 |
| Temperatur [° C] | 131.0 | 30.0 | 20.0 | 72.0 | 244.0 |
| Druck [bar] | 9.5 | 9.0 | 12.5 | 12.0 | 11.5 |

### Beispiel 3

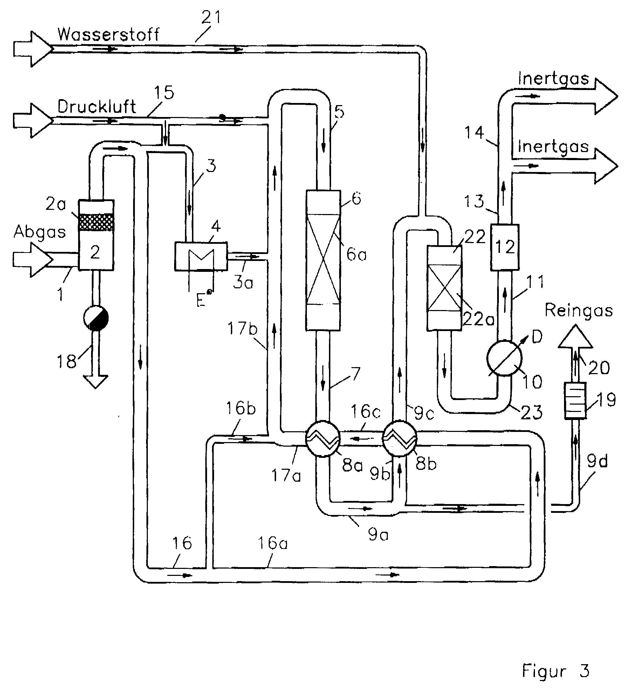

Beispiel 3 (Verfahrensvariante 1, Figur 3) behandelt den Fall einer mittleren Schadstoffbelastung mit Sauerstoffüberschuß. Der Sauerstoffüberschuß wird in einem nachgeschalteten Druckreaktor 22 an einem Festbettkatalysator 22a katalytisch reduziert. Die Reaktionsenthalpie wird zur Dampferzeugung benutzt. Die gesamte Gasmenge soll als sauerstofffreies Inertgas bereitgestellt werden.

Die Berechnungen gehen von folgenden Vorgaben aus:

### Abgas

| | |
|---|---|
| - Abgasmenge | 29350,0 kg/h = 23000 Nm³/h |
| - Temperatur | 20 °C |
| - Betriebsdruck | 12,5 bar |

### Abgaszusammensetzung

| | |
|---|---|
| - Lösungsmittel | 40,0 kg/h p-Xylol |
| - Säure | 0,6 kg/h Essigsäure |
| - Acetat | 0,6 kg/h Methylacetat |
| - sonst. Stoffe | 210,3 kg/h Kohlenmonoxid |
| | 27413,0 kg/h Stickstoff |
| | 500,0 kg/h Sauerstoff |
| | 1129,3 kg/h Kohlendioxid |
| | 25,3 kg/h Wasser |

### Katalysatorschüttung für Druckreaktor 22

| | |
|---|---|
| - Katalysator | Angaben identisch zum |
| - Katalysatorform | Katalysator für die |
| - Katalysatormenge | katalytische Nachverbrennung |
| - Raumgeschwindigkeit | im Beispiel 1 |

### Katalysatorschüttung für Druckreaktor 6

| | |
|---|---|
| - Katalysator | Angaben gemäß Beispiel 1 |
| - Katalysatorform | |
| - Katalysatormenge | |
| - Raumgeschwindigkeit | |

Das Verfahren läuft energetisch autark. Ein Teilstrom des Abgases strömt durch Leitung 16a zur Vorwärmung durch die Wärmeübertrager 8a und 8b und wird gegen das heiße Reingas, das mit ca. 418°C aus dem Druckreaktor 6 strömt, auf ca. 349°C erhitzt. Das Gas in Leitung 17a vereint sich mit dem restlichen kalten Abgas, das durch Leitung 16b strömt und strömt über Leitung 17b mit einer Temperatur von ca. 300°C in den Druckreaktor 6. Im Druckreaktor 6 finden die im Beispiel 1 angegebenen Reaktionen statt. Die Druckluftleitung 15 ist geschlossen.

Das schadstoffreie Abgas gelangt über die Wärmeübertrager 8a und 8b in Leitung 9c und tritt dort mit einer Temperatur von ca. 143°C in den Druckreaktor 22 ein. Die Leitung 9d ist geschlossen. Über Leitung 21 wird in Leitung 9c die Menge Wasserstoff dosiert zugemischt, die ausreicht, um im Druckreaktor 22 bzw. im Katalysatorbett 22a die Reaktion Wasserstoff mit Sauerstoff zu Wasser ablaufen zu lassen.

Die H₂-Regelung erfolgt über eine Abgassonde in Leitung 11 und ein in Leitung 21 installiertes Regelventil. Mit der kontrollierten Sauerstoffreduktion, die stark exotherm verläuft, wird das Abgas wieder auf eine Temperatur von ca. 267°C erhitzt und über Leitung 23 in den Dampferzeuger 10 geleitet. Die Reaktionsenthalpie wird hier zur Produktion von ca. 3 t/h Dampf mit 3,5 bar genutzt. Der Restsauerstoffgehalt des Reingases in Leitung 11 beträgt < 1 mg/Nm³.

Das erzeugte Inertgas wird über Leitung 11 in die Trocknereinheit 12 zur Entfernung des Restwassers geleitet. Die weitere Verfahrensweise entspricht dem des Beispiels 1.

In der Tabelle 3 sind die wesentlichen Stoffströme dieses Beispiels zusammengefaßt.

**Tabelle 3**

| Strom-Nr. | 1 | 5 | 7 | 9b | 23 |
|---|---|---|---|---|---|
| Massenstrom [kg/h] | 29350 | 29350 | 29350 | 29350 | 29350 |
| Temperatur [° C] | 20 | 300 | 418 | 301 | 267 |
| Druck [bar] | 12,5 | 12,1 | 11,9 | 11,7 | 11,5 |

| Strom-Nr. | 11 | 21 | | | |
|---|---|---|---|---|---|
| Massenstrom [kg/h] | 29350 | 32 | | | |
| Temperatur [° C] | 35 | 20 | | | |
| Druck [bar] | 11,3 | 12,5 | | | |

## Patentansprüche

1. Verfahren zur Reinigung von unter Druck stehenden Abgasen, die mit organischen Luftschadstoffen beladen sind, durch katalytische Nachverbrennung in einem Druckreaktor bei einer Arbeitstemperatur zwischen 250 und 800° C, wobei die Arbeitstemperatur je nach Schadstoffbeladung des Abgases durch die exothermen Reaktionen am Katalysator und/oder durch Zufuhr von externer Stützenergie aufrecht erhalten wird,
**dadurch gekennzeichnet**,
daß die Nachverbrennung bei Drucken zwischen 2 und 20 bar ohne oder unter Zufuhr von Druckluft vorgenommen und die Stützenergie dem Abgas vor dem Druckreaktor über einen Wärmeübertrager und/oder Elektroaufheizer zugeführt wird.

2. Verfahren nach Anspruch 1,
**dadurch gekennzeichnet**,
daß die Zufuhr von Druckluft so dosiert wird, daß das gereinigte Abgas im wesentlichen sauerstofffrei ist und als Inertgasersatz in den Druckstufen 1 bis 20 bar zur Verfügung steht.

3. Verfahren nach Anspruch 1,
**dadurch gekennzeichnet**,
daß das gereinigte Abgas zur Nutzung seiner Druckenergie über eine Entspannungsturbine geleitet und anschließend in die Atmosphäre abgegeben wird.

4. Verfahren nach Anspruch 1,
**dadurch gekennzeichnet**,
daß ein im Abgas vorhandener Sauerstoffüberschuß durch eine der katalytischen Nachverbrennung nachgeschaltete katalytische Sauerstoffreduktion mit Wasserstoff derart vorgenommen wird, daß das gereinigte Abgas sauerstofffrei ist.

5. Verfahren nach Anspruch 4,
**dadurch gekennzeichnet**,
daß die katalytische Sauerstoffreduktion und die katalytische Nachverbrennung hintereinander in einem gemeinsamen Druckreaktor vorgenommen werden.

6. Verfahren nach Anspruch 4,
**dadurch gekennzeichnet**,
daß die katalytische Sauerstoffreduktion und die katalytische Nachverbrennung in getrennten Druckreaktoren durchgeführt werden, wobei gegebenenfalls zwischen katalytischer Nachverbrennung und katalytischer Sauerstoffreduktion eine Zwischenkühlung des Abgases vorgenommen wird.

7. Verfahren nach einem der Ansprüche 5 oder 6,
**dadurch gekennzeichnet**,
daß das gereinigte Abgas als Inertgasersatz in den Druckstufen 1 bis 20 bar zur Verfügung steht.

8. Verfahren nach einem der Ansprüche 5 oder 6,
**dadurch gekennzeichnet**,
daß das gereinigte Abgas zur Nutzung seiner Druckenergie über eine Entspannungsturbine geleitet und anschließend in die Atmosphäre abgegeben wird.
